Europäisches Patentamt

European Patent Office

Office européen des brevets

(19)

(11) Veröffentlichungsnummer: **0 122 369**
**B1**

(12) **EUROPÄISCHE PATENTSCHRIFT**

(45) Veröffentlichungstag der Patentschrift: **16.05.90**

(21) Anmeldenummer: **84100669.5**

(22) Anmeldetag: **23.01.84**

(51) Int. Cl.⁵: **A 23 G 1/04,** A 23 G 1/20

(54) Giessverfahren zum Giessen von Schokolade u.dgl. und Giessmaschine zur Durchführung des Giessverfahrens.

(30) Priorität: **14.04.83 IT 2058983**

(43) Veröffentlichungstag der Anmeldung:
**24.10.84 Patentblatt 84/43**

(45) Bekanntmachung des Hinweises auf die Patenterteilung:
**16.05.90 Patentblatt 90/20**

(84) Benannte Vertragsstaaten:
**AT BE CH DE FR GB LI LU NL SE**

(56) Entgegenhaltungen:
**DE-C- 462 969**
**FR-A- 384 797**
**FR-A-1 098 824**
**US-A-1 696 845**

(73) Patentinhaber: **CARLE & MONTANARI S.p.A.**
**Via Neera 39**
**I-20141 Milano (IT)**

(72) Erfinder: **Cerboni, Renzo**
**Via Raffaello Sanzio, 30**
**I-20149 Milano (IT)**

(74) Vertreter: **de Dominicis, Riccardo et al**
**de Dominicis & Mayer Piazzale Marengo 6**
**I-20121 Milano (IT)**

EP 0 122 369 B1

Courier Press, Leamington Spa, England.

**Beschreibung**

Die vorliegende Erfindung bezieht sich auf ein Giessverfahren zum Giessen von Schokolade u. dgl., wie z. B. Fondant, Nougat, Kremen usw. und auf eine Giessmaschine zur Durchfuehrung des Giessverfahrens. Dies vorausgesetzt, wird nachfolgend der Einfachheit halber lediglich auf die Schokolade bezuggenommen.

Wie an sich bekannt, dienen die bekannten Giessmaschinen der dosierten Uebergabe von Schokolade von einem die Schokolade enthaltenden Trichter in Giessblechen bzw. Giessformen zur Herstellung der gewuenschten Produkte wie z. B. von Schokoladentafeln, Pralinen, geschichteten bzw. zusammengesetzten Pralinen usw. Die bekannten Giessmaschinen weisen gewoehnlich einen oder zwei Trichter auf, die Ruehrmittel enthalten und jeweils in eine Ventilkammer, enthaltend drehbare und durchgehende Kanaele aufweisende Ventile, muenden, wobei die letzteren einerseits einer Dosiereinheit zur Dosierung der gewuenschten Schokoladenmenge und andererseits Kanaelen der Giessmaschine zugeordnet sind und wobei die genannten Kanaele in Bohrungen bzw. Kanaelen von unterhalb der Giessmaschine angeordneten Giessplatten ausmuenden. Die Dosiereinheiten bestehen aus Kolben/Zylinder-Einheiten, die seitlich in bezug auf die erwaehnten drehbaren Ventile vorgesehen sind und waehrend eines Drehvorganges der genannten Ventile in Verbindung mit einem diesbezueglichen Trichterabteil und mittels einer Rueckbewegung der Kolben das Ansaugen im zugeordneten Zylinder einer bestimmten Menge Schokolade bewirken und danach, in einer nachfolgenden Drehstellung der genannten drehbaren Ventile, mittels der Ausgangsbewegung der Kolben, das Auspressen der Schokolade ueber die in die Bohrungen bzw. Kanaele der genannten Ausgiessplatten ausmuendenden Ausgangskanaele der Giessmaschine bewirken.

Die Bauweise der genannten Giessmaschinen und der Giessplatten ist z. B. der IT—A—488 620 entnehmbar.

In den Fachkreisen ist es ebenfalls bekannt, dass in den Giessmaschinen die Schokolade sich in einem Vorkristallisationszustand befindet und deshalb, um die Kristallisation, die nach dem Ausgiessvorgang zu erfolgen hat, zu vermeiden, hat man lediglich sehr kurze Behandlungszeiten zur Verfuegung. Es ist deshalb aeusserst wichtig, die Temperatur der Schokolade im Schokoladentrichter bis in den Giessplatten bzw. -formen soweit wie moeglich genau aufrechtzuerhalten.

Die bekannten Giessmaschinen weisen in der Praxis verschiedene Nachteile und Unzulaenglichkeiten baulicher, funktioneller und physikalisch-struktureller Art auf, im letzten Fall insbesondere in Hinsicht auf die auf die Schokolade ausgeubte Wirkung, wobei die wichtigeren dieser Nachteile nun nachfolgend kurz erwaehnt werden:

die Anwendung von an den Giessmaschinenseiten angebauten Kolben/Zylinder-Einheiten bzw. von eine hin- hergehende Bewegung bewirkenden Einheiten fuehrt zu einem betraechtlichen Raumbedarf.

Bei der Anwendung von Kolben/Zylinder-Einheiten ist es moeglich, Giessmaschinen mit hoechstens zwei Speisetrichtern und deshalb mit zwei an zwei gegenueberliegenden Seiten der Giessmaschinen angebauten Kolben/Zylinder-Einheitsgruppen einzusetzen. Im Falle von drei oder mehrere verschiedene Bestandteilen bzw. Qualitaeten, d.h. Schokoladentypen od. dgl. aufweisende Pralinen wird es deshalb erforderlich, zwei Giesmaschinen hintereinander anzuordnen und den damit verbundenen groesseren Raumbedarf sowie hoehere Investitionskosten in Kauf zu nehmen.

Die gesamte interne Umfangsflasche der Zylinder bildet fuer die verdraengte Schokolade eine Gleitreibungsflaeche, die die Kristallisation der Schokolade bewirkt und auf der internen Umfangsflaeche der Zylinder bildet sich deshalb ein Schokoladenfilm, der dazu neigt, hart zu werden und die Kolben zu blockieren.

Am Ende der taeglichen Arbeit ist es erforderlich, die Kolben/Zylinder-Einheiten mit Sorgfalt zu reinigen, um somit eine zuverlaessige Betriebsweise bei der erneuten Ingangsetzung der Giessmaschine am naechsten Tage zu gewaehrleisten.

Aufgrund der verschiedenen Herstellungstoleranzen der einzelnen Teile einerseits und der Beanspruchungen und unvermeidbaren Betriebsverschleiss andererseits entstehen verschiedene Spielraeume bei den verschiedenen Kolben/Zylinder-Einheiten und indirekterweise verschiedene Dosierungen, d.h. voneinander abweichende Gewichte der hergestellten Produkte. Dadurch, dass das Gewicht der Produkte mit feinen Toleranzen von Zentelgremman gewogen wird, fuehren diese Raumspiele zu betraechtlichen Schwierigkeiten aufgrund der Strenge der Gesetze ueber die Gewichtstoleranzen in den verschiedenen Staaten.

Mit den bekannten eine hin- und hergehende Betriebsweise aufweisenden Einheiten erfolgt die Schokoladendosierung mit "gewaltsamen" Einwirkungen auf die Schokolade.

Solche Wirkungen auf die Schokolade beeintraechtigen und entziehen wie an sich bekannt dem Endprodukt den Glanz, wobei dieser Glanz dagegen an sich sehr wuenschenswert ist.

Die FR—A—1,098,824 zeigt eine Giessmaschine fuer Schokolade und dergleichen zum Ueberziehen von Zwieback und Kuchen. Ein mit radial vorstehenden, einstueckigen Schaufeln versehener Rotor ist in einer Aufnahmekammer des Maschinenkoerpers unterhalb eines Schokoladentrichters aufgenommen. Die Aufnahmekammer weist eine halbzylinderfoermige Aufnahmekammerhaefte, die mit dem Rotor eine Dosierkammer bildet, und eine erweiterte Aufnahmekammerhaefte auf. Im Schokoladentrichter ist ein Paar von Zufuhrzylindern gelagert. Im unteren Bereich der Aufnahmekammer ist ein schwenkbares massives Steuerventil gelagert, das die Dosierkammer mit einer Austragduese wechselweise verbindet, bzw. abtrennt. Bei einer Ausfuehrungvariante ist das Steuerventil als ein Kolben viereckigen Querschnittes vorgesehen, wobei der Kolben mit durchgehenden Bohrungen versehen und in einem viereckigen Sitz zwischen der Austragduese und dem Rotor aufgenommen ist. Steuermittel zur Steuerung dieses kolbenartigen Ventils sind weder beschrieben noch dargestellt. Die aus der FR—A—1,098,824 bekannte Giessmaschine weist eine einzige Austragduese auf. Sie ist nicht in der Lage, eine Anzahl von Hohlraeumen von nebeneinander angeordneten Giessblechen zu speisen, wie z.B. in Anlagen zur Herstellung von Pralinen usw. ueblich sind. Das kolbenartige Steuerventil weist ferner den Nachteil auf, dass die erforderlichen Arbeitshübe eine Verlaengerung der Verlagerungsstrecken der Schokolade mit sich bringen. Es ist ferner zu merken, dass in der Schokolade enthaltene kleine feste Bestandteile die Arbeitsweise des kolbenartigen Ventils beeintraechtigen und zur Verstopfung der Durchgansloecher des Ventils fuehren koennen. Eine durch kleine Festteile verursachte Abkuerzung der Arbeitshübe wuerde jedoch bei diesem Ventil zum Anprallen zwischen dem Ventil und den Rotorschaufeln fuehren und somit zum Anhalten der Giessmaschine. Dieselbe ist deshalb nicht geeignet, kleine Festteile wie Obstschalen, Haselnussteile enthaltende Schokolade zu geissen.

Aus der US—A—1,696,845 ist eine Giessmaschine zum Austragen von Schokolade durch eine Anzahl von Duesen bekannt. Die Duesen sind mit einer axialen Aufnahmekammer verbunden, die oben zum Schokoladentrichter hin offen ist. In dieser Aufnahmekammer ist eine Ventileinheit aufgenommen, die aus einem muffenartigen aeusseren Zylinderkoerper und einer im Zylinderkoerper aufgenommenen schwenkbaren Welle besteht.

Im Zylinderkoerper sind nebeneinander liegende Dosierkammern enthalten, und zwar eine Dosierkammer fuer jede Austragduese. Auf die Welle ist eine Anzahl von radial vorstehenden Kolben vorgesehen, und zwar ein Kolben fuer jede Dosierkammer im Zylinderkoerper. Im Betrieb wird der muffenartige Zylinderkoerper deshalb alternierend geschwenkt, um die Dosierkammern wechselweise mit dem Schokoladentrichter und den Austragduesen in Verbindung zu setzen. Auch die Welle wird alternierend geschwenkt, damit die Kolben in den zugehoerigen Dosierkammern das Austragen der Schokolade durch die Austragduesen hindurch bewirken. Soll jedoch die Produktion bzw. die Menge der auszutragenden Schokolade gewechselt werden, so ist es bei dieser Giessmaschine erfoderlich, die ganze Ventileinheit sowie die Duesenplatte durch eine andere Ventileinheit und eine andere Duesenplatte zu ersetzen. Bei dieser Giessmaschine ist ferner die schwenkbare Betriebsweise der Ventileinheit langsam und die Dosierungsgenauigkeit ziemlich grob. Mit der gleichen Ventileinheit ist es ferner nicht moeglich, die Schokoladenaustragmenge zu variieren. Der vorliegenden Erfindung liegt die Aufgabe zugrunde, eine Giessmaschine und ein Verfahren zum Giessen von Schokolade oder dergleichen zu schaffen, die in der Lage sind, ein genaues, leicht einstellbares und rasches Austragen von Schokolade, Cremen und dergleichen, sowie von kleine Festteile enthaltender Schokolade und dergleichen durch eine Anzahl von Austragduesen zu ermoeglichen.

Es liegt im Rahmen dieser Aufgabe, eine Giessmaschine zu schaffen, die eine einfache, zusammengedraengte und baukastenartige Beauweise aufweist, die eine einfache Durchfuehrung der jeweils erforderlichen Gleichlaeufs sowie eine leichte Anpassbarkeit des Rotors an den verschiedenen herstellbaren Produkten erlaubt.

Im Rahmen der oben angegebenen Aufgabe soll ferner die vorgeschlagene Giessmaschine eine Betriebsweise mit kontinuierlicher Bewegung der Giessformen ohne Hin- und Herbewegung der Giessmaschine gestatten, bzw. eine Aenderung der Schokoladenaustragegeschwindigkeit ermoeglichen.

Erfindungsgemaess wird diese Aufgabe durch die kennzeichnenden Merkmale des Anspruches 1 fuer die Giessmaschine und des Anspruchs 16 fuer das Giessverfahren geloest.

Weitere, die Erfindung in vorteilhafter Weise ausgestaltenden Merkmale beinhalten die abhängigen Ansprüche Mit der vorgeschlagenen Giessmaschine werden verschiedene Vorteile bezueglich der Bauweise bzw. der Betriebsweise sowie einer feinfuehligen Einwirkungsweise auf das Produkt bzw. die Schokolade erzielt.

Die Bausweise ist einfach herzustellen, verlangt eine kleine Anzahl von Bestandteilen und ist sehr gedrungen. Die vorgeschlagene Bauweise ermoeglicht es, die behandelte Schokolade auf dem ganzen Foerderungsweg in der Giessmaschine optimal zu temperieren. Durch den direkten Durchgang der Schokolade in der Giessmaschine mittels einer einsinnigen Drehbewegung nach Art einer "Begleitung" wird eine aeusserst feinfuehlige Behandlung der Schokolade erreicht, und dadurch wird der Glanz der gefertigten Schokoladenerzeugnisse weder beeintraechitgt noch vermindert.

Noch ein weiterer Vorteil besteht in einer baukastenartigen Bauweise bzw. in der Moeglichkeit, mehrere erfindungsgemaesse baukastenartige Giessmaschinen ohne Anzahlbegrenzung derselben nebeneinander anzuordnen, um somit die Herstellung von zusammengesetzten Schokoladenprodukten bzw. Pralinen mit einer beliebigen Anzahl von Bestandteilen bzw. Schokoladenqualitaeten zu ermoeglichen.

Noch ein weiterer Vorteil besteht erfindungsgemaess darin, dass die erzielbare kompakte bzw. gedrungene Bauweise sich einerseits fuer die guenstige waehrend der Betriebsweise erhaltbare Waermetraegheit und andererseits fuer die Einfachheit des Systems zur Regelung und Beibehaltung der Temperatur sowie zur Anwendung desselben vorteilhaft auswirkt.

Noch ein weiterer Vorteil besteht darin, dass die mehreren vorgesehenen drehbaren Dosierkammern keinen auf Spielraeume zurueckzufuehrenden volumetrischen Aenderungen ausgesetzt sind, wodurch die Schokoladendosierungen mit aeusserst feinen Gewichtstoleranzen mit Sicherheit ausfuehrbar sind. Dies ist auch wegen der moeglichen einfachen Schokoladendosierungs- bzw. Schokoladenaustragshubregelung deshalb erzielbar, weil unter Verwendung einer einsinnigen bzw. einseitig gerichteten Drehbewegung die Verwendung von aeusserst genauen Antriebsmitteln, wie z. B. einem mit einem fuer die genaue Ablesung der winkligen Stellung des Rotors vorgesehenen Encoder zusammenarbeitenden Gleichstromantriebsmotors zum Antreiben des Rotors ermoeglicht wird. Dies vereinfacht ferner die Erzielung des notwendigen Gleichlaufs mit den Antriebsmitteln der Giessbleche bzw. -formen.

Beim Wechseln der Giessformen bzw. -bleche ist es darueber hinaus ohne weiteres moeglich, die Giessmaschine schnell entsprechend anzupassen, entweder unter Ersetzung des Rotors durch einen anderen eine verschiedene Anzahl von Dosierkammern aufweisenden Rotor, oder unter Ausschliessung einiger Dosierkammern beim gerade eingebauten Rotor.

Es waere ebenfalls moeglich, auf dem gleichen Rotor zwei oder mehrere voneinander gleichentfernten Drehkolben vorzusehen.

Die schwenkbaren Ventile werden ferner vorteilhafterweise auf einem einzigen wellenartigen Profil ausgearbeitet und deren Betaetigung wird auf eine einfache und zuverlaessige Weise ueber eine Kolben/Zylindereinheit bewirkt.

Noch ein weiterer Vorteil der vorgeschlagenen Giessmaschine besteht darin, dass tadellose und gleichbleibende volumetrische Wirkungsgrade erhaltbar sind.

Weitere Merkmale, Vorteile und Einzelheiten der vorgeschlagenen Giessmaschine bzw. des erfindungsgemaessen Giessverfahrens sind der nachfolgenden Beschreibung unter Bezugnahme auf die beigefuegten, eine vorgezogene Ausfuehrungsform einer Giessmaschine darstellenden schematischen Zeichnungen entnehmbar.

Es zeigen:

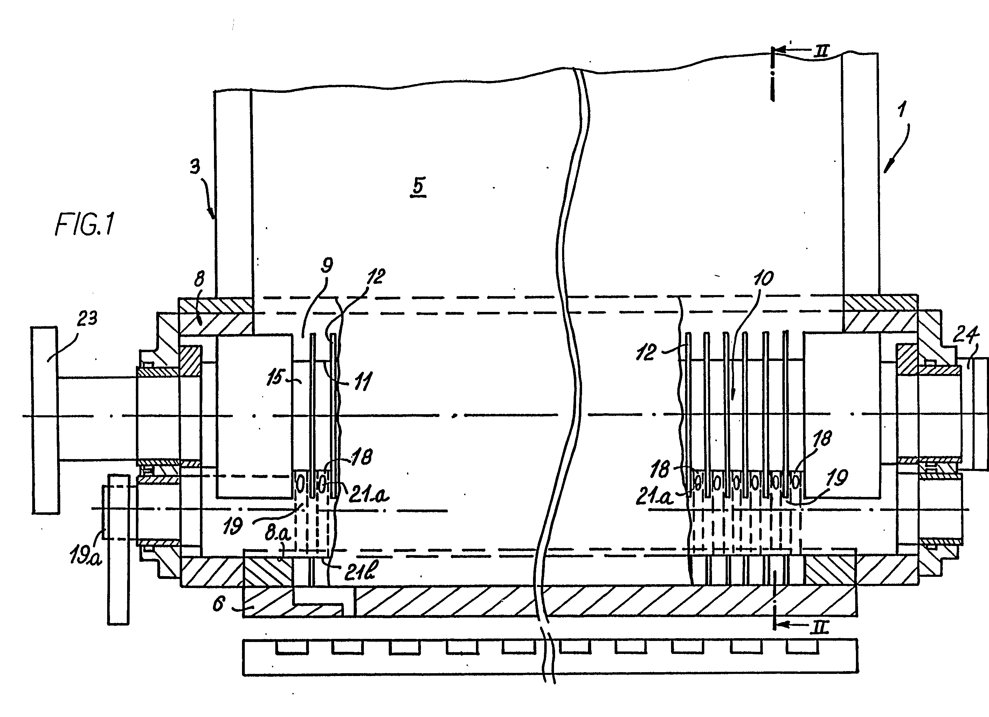

Fig. 1 eine Seitenansicht einer erfindungsgemessen Zwillings giessmaschine mit einigen im Schnitt dargestellten Teilen derselben,

Fig. 2 einen Querschnitt gemaess der Linie II—II in Fig. 1,

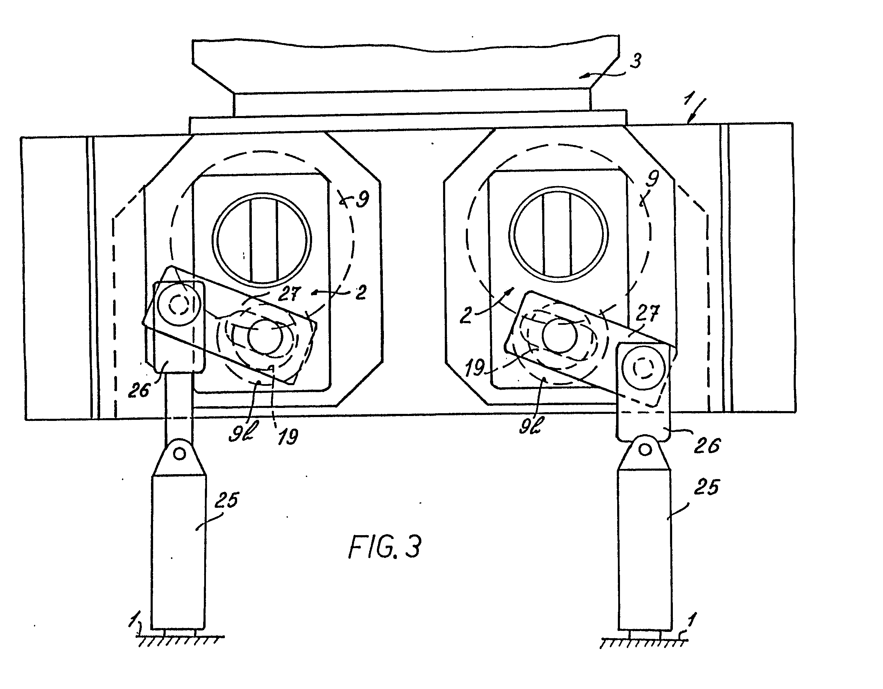

Fig. 3 eine Rueckansicht der Giessmaschine nach Fig. 1 und 2, und

Fig. 4 ein Detail in prospektivischer Ansicht und in groesserem Massstab eines erfindungsgemaessen Rotors mit Drehkolben, wobei die letzteren in Form eines einzigen Profils der Deutlichkeit halber vom Rotor getrennt dargestellt sind.

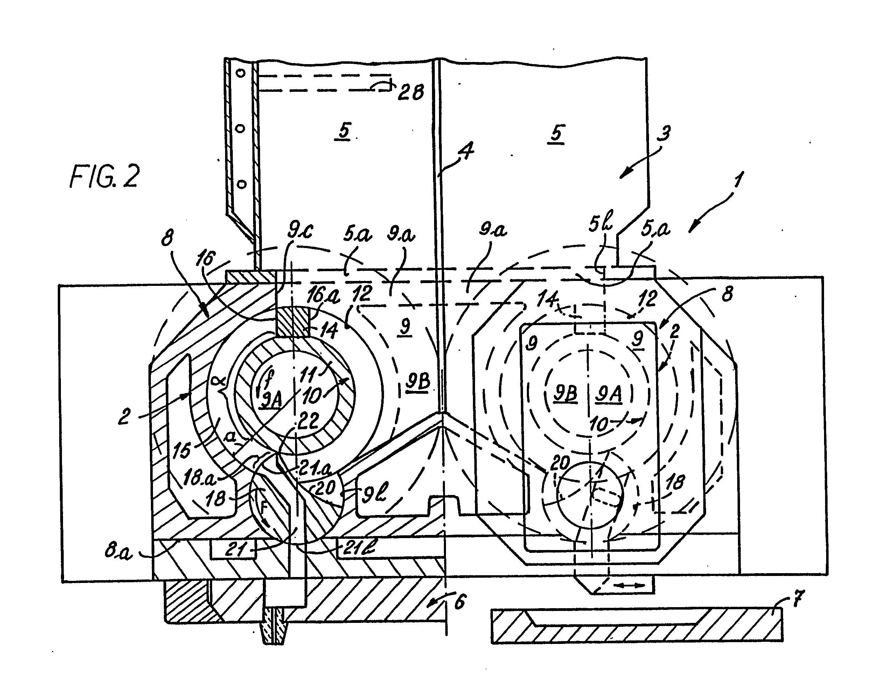

Die dargestellte Zwillings giessmaschine wird insgesamt mit 1 bezeichnet und enthaelt zwei erfindungsgemaess zur Herstellung von z. B. geschichteten bzw. gefuellten Schokoladenpralinen vorgesehene Dosiergruppen bzw. -vorrichtungen 2. Die beiden Dosiergruppen 2 weisen die gleiche bauliche Ausfuehrung auf, so dass nachfolgend der Einfachheit halber lediglich auf eine derselben Bezug genommen wird. Mit 3 wird der durch die Trennwand 4 in den einzelnen Trichtern 5 unterteilten Trichterkoerper bezeichnet, wobei jeder einzelne Trichter 5 die demselben zugeordneten Dosiergruppe 2 speist. Die Dosiergruppe 2 ist erfingungsgemaess unmittelbar dem zugeordneten Trichter 5 nachgeschaltet und weist auf seiner Dosiergruppenunterseite eine zugeordnete Giessplatte 6 fuer das gewoehnliche punktartige Schokoladenspeisen, wie in der linken Haelfte von Fig. 2 dargestellt, auf oder, im Falle des bekannten sogenannten zungenartigen Schokoladenspeisens, d.h. fuer kleine feste Bestandteile, wie z.B. Obststuecke, enthaltende Schokolade arbeitet die Dosiergruppe 2 unmittelbar mit den darunterstehenden beweglichen Giessformen 7, wie in der rechten Haelfte der Fig. 2 dargestellt, zusammen.

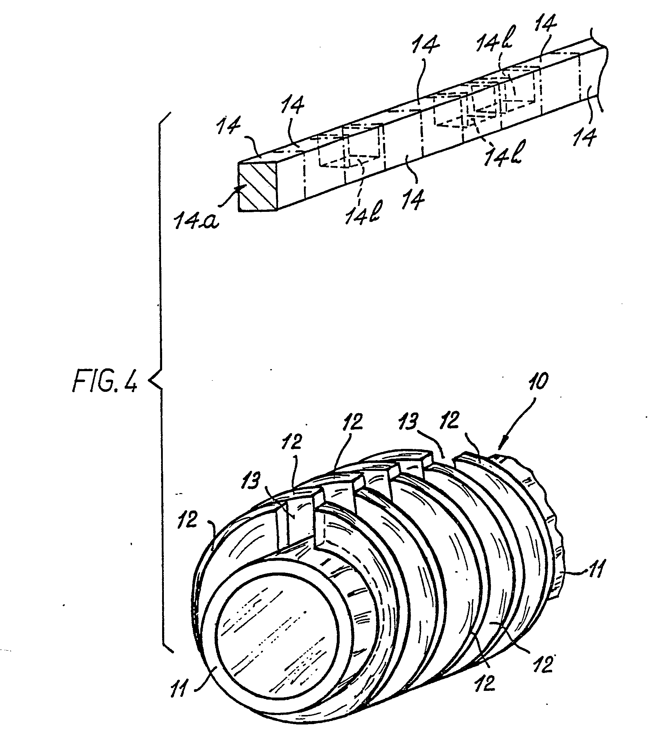

Die Dosiergruppe 2 besteht im wesentlichen aus einem gehaeuseartigen Koerper 8, der einen profilierten Dosier- und Mischhohlraum 9 sowie, oberhalb des leizteren, eine Durchgangsoeffnung 9a im Bereich der offenen Unterseite 5a des Schokoladentrichters 5 und, unterhalb des genannten Dosier-und Mischhohlraums 9 einen Aufnahmesitz 9b zur Aufnahme von in der Folge naeher beschriebenen Absperrmitteln aufweist. Im Dosier- und Mischhohlraum 9 ist ein mit 10 bezeichneter Rotor drehbar gelagert. Der Rotor weist einen zylindrischen Koerper 11 auf, wobei auf demselben eine Anzahl von scheibenartigen und z.B. einteilig mit dem Rotor selbst erhaltenen, voneinander entfernt angeordneten Wellenbunden 12 (Fig. 4) vorgesehen sind. Die Wellenbunde weisen jeweils einen im vorliegenden Beispiel durchgehenden Aufnahmesitz 13 zur Aufnahme eines brueckenartigen als Drehkolben wirkenden Profilabschnittes 14. Im dargestellten Beispiel ist aus Gruenden einer einfachen Herstellung die Verwendung eines einzigen durchgehenden Profilabschnittes 14a vorgesehen, wobei das letztere in den durchgehenden Aufnahmesitzen 13 aufgenommen wird und dabei alle die vorgesehenen, in der Zeichnung durch eine strichpunktierte Linie getrennten einzelnen Drehkolben 14 bildet.

Wie insbesondere aus Fig. 2 ersichtlich, besitzt der profilierte Dosier- und Mischhohlraum 9 eine Gestaltung mit einem im wesentlichen halbzylindrischen Beladungs- und Dosierungshohlraumteil 9A und mit einem erweiterten Misch- bzw. Ruehrhohlraumteil 9B, wobei der letztere 9B groessere Abmessungen als der Dosier hohlraumteil 9A aufweist. Im dargestellten Beispiel nehmen die Hohlraumteile 9A und 9B im wesentlichen je eine Haelfte des Dosier- und Mischhohlraums 9 ein.

Im Inneren des Dosier- und Mischhohlraums 9 bilden deshalb die Wellenbunde 12 im Dosierhohlraumteil 9A eine Anzahl von einzelnen Dosierkammern 15, die praktisch bewegliche bzw. drehbare Dosierkammern darstellen, bei denen nur eine feste Wand, und zwar die interne Koerperwand des halbzylindrischen Dosierhohlraumteils 9A vorgesehen ist. Die in Drehrichtung des Pfeils f vordere Seite 16 der Drehkolben 14 bildet deshalb eine Schiebe bzw. Verlagerungsflaeche, die, als dieselbe in Ausrichtung mit der Seitenwand 9c der Durchgangsoeffnung 9a gelangt, die dazugehoerige bzw. nachgeordnete Dosierkammer 15 bei einem Ende derselben zuschliesst. Die betreffende Dosierungskammer 15, die sich im dargestellten Beispiel fuer die Drehungsstrecke α erstreckt, ist am anderen Ende durch den als bewegliche Wand fungierenden eingeschwenkten Anschlagabschnitt 18a eines zugeordneten scheibenartigen schwenkbaren Austragventils 18 begrenzt. Vorteilhafterweise werden die Austragventile 18 als von einem wellenartigen insgesamt mit 19 bezeichneten Wellenelement 19 abstehenden scheibenartigen Wellenbunden erhalten, wobei das Wellenelement 19 im schon erwaehnten Aufnahmesitz 9b gelagert ist. Jedes Austragventil 18 weist ferner eine bogenfoermige Ausnehmung 20 sowie eine Austragbohrung 21 auf. Die letztere weist eine im genannten Anschlagabschnitt 18a ausmuendende Einlassoeffnung 21a, sowie eine Austragoeffnung 21b auf. Mit 22 wird die durch die Verschneidung zwischen dem Anschlagabschnitt 18a und der Ausnehmung 20 gebildete Kante bezeichnet, wobei diese Kante 22 bei der Schokoladenaustragphase als Dichtkante wirkt, bzw. mit der Aussenflaeche des zylindrischen Rotorkoerpers 11 wie in Fig. 2 dargestellt, zusammenarbeitet.

Wie aus Fig. 2 ersichtlich, weist im dargestellten Beispiel die Ausnehmung 20 einen bogenartigen Umriss auf, und zwar mit einem Halbmesser gleich dem Halbmesser der Innenkreislinie des im wesentlichen halbzylinderfoermigen Dosierhohlraumteils 9A des Dosier- und Mischhohlraums 9. Dies ermoeglicht, wenn das schwenkbare Austragventil 18 derart geschwenkt ist, dass dasselbe das Ausschwenken des Anschlagabschnittes 18a aus der demselben zugeordneten kreisfoermigen Dosierkammer 15 bestimmt, den freien bzw. ungehinderten Durchgang des dazugehoerigen Drehkolbens 14 ueber das genannte Ventil vorbei. Wie aus Fig. 2 ersichtlich, endet im dargestellten Beispiel der winklige Dosierhub α bei der Linie a, die vom Anschlagabschnitt 18a etwa entfernt ist, um die Moeglichkeit zu geben fuer einen Augenblick die Drehbewegung der Drehkolben 14 mit Sicherheit und Genauigkeit anzuhalten, um somit die Ausschwenkbewegung des genannten Anschlagabschnittes 18a aus der zugeordneten Dosierkammer 15 auf eine sichere und tadellose Weise zu ermoeglichen. In der Praxis ist diese Genauigkeit der Betriebsweise einfach und unter Verwendung von bei Werkzeugmaschinen mit numerischer Steuerung schon bewaehrten Drehantrieben, z.B. unter Verwendung zum Antreiben des Rotors 10 von einem mit 23 bezeichneten Gleichstrommotor erreichbar, der mit einem die augenblickliche Winkelstellung des Rotors 11 ablesenden Encoder 24 zusammenarbeitet, der in der Lage ist, das Anhalten des genannten Rotors 10 im gewuenschten Augenblick zu bewirken.

Die Schwenkbewegung der schwenkbaren Ventile 18, bzw. des Wellenelementes 19 derselben, wird im dargestellten Beispiel unter Verwendung einer Zylinder/Kolben-Einheit 25 bewirkt. Das freie Ende der Kolbenstange dieser Einheit 25 ist ueber eine zwischengelegte Verbindungslasche 27 mit dem Ende 19a des genannten Wellenelementes 19 verbunden. Eine naehere Beschreibung dieser Verbindung wird deshalb weggelassen, weil dieselbe an sich schon bekannt ist.

In der Folge wird nun die Wirkungsweise der erfindungsgemaessen Giessmaschine beschrieben sowie das vorgeschlagene Giessverfahren naeher erlaeutert.

Ausgehend von der in Fig. 2 dargestellten Rotorstellung, bestimmt die Drehung des Rotors 10 in Drehrichtung des Pfeils f eine entsprechende Drehbewegung der Drehkolben 14, die als hintere Schliesswände 16 der genannten Dosierkammern 15 fungieren, waehrend die beweglichen vorderen Wände der Dosierkammern 15 jeweils durch den betreffenden Anschlagabschnitt 18a gebildet werden. Das Produkt bzw. die Schokolade fuellt kontinuierlich die Dosierkammern 15 deshalb vollstaendig, weil sie laufend durch Schwerkraft in dieselben bzw. in den halbzylinderfoermigen Dosierhohlraumteil 9A sowie in den Ruehrhohlraumteil 9B eintritt. Bei in den Dosierkammern 15, wie in Fig. 2 dargestellt, sich befindenden Anschlagabschnitten 18 bewirkt die Vorwaertsbewegung der Drehkolben 14 nach der Seitenwand 9c der oberen Oeffnung 9a das Austragen bzw. Ausgiessen durch die durchgehenden Austragbohrungen 21 der schwenkbaren Ventile 18 der sich in den Dosierkammern 15 vor den genannten Drehkolben 14 in Drehrichtung befindenden Schokolade. Wenn die Vorderwand 16 der Drehkolben 14 an der vorgesehenen Anhaltslinie a ankommt, bzw. nach Zuruecklegung des Dosierhubs α der jeweils vorgesehenen Dosierkammern 15, wird der Rotor 10 fuer einen Augenblick angehalten. Waehrend dieses Augenblicks wird ueber die Kolben/Zylinder-Einheit 25 die Ausschwenkung der Ventile 18 in Drehrichtung des Pfeils F bzw. das Ausschwenken der Anschlagabschnitte 18 aus den Drehkammern 15 mit gleichzeitiger Unterbrechung der Schokoladenaustragphase bewirkt. Waehrend dieses Austragshubs tritt nach der Vorderwand 16a der Drehkolben 14 die Schokolade in die nun offenen Dosierkammern 15 durch Schwerkraft kontinuierlich ein. Man hat deshalb gleichzeitig eine Schokoladenaustragphase vor den Drehkolben 14, in Drehrichtung f gesehen, sowie eine Schokoladendosier- bzw. -beladungsphase nach den genannten Drehkolben. Dies ist deshalb moeglich, weil zur Ausfuehrung der Verfahrensphasen eine kreisfoermige einsinnige Drehbewegung benutzt wird. Dies ermoeglicht ferner, beliebig d.h. in Abhaengigkeit von den jeweils eingesetzten Giessformen bzw. -blechen die Austragmenge einfach zu regeln, indem man die Laenge der Winkelstrecke α variiert, wobei diese Laenge geeignet ist, auf eine genaue und sichere Weise von an sich bekannten Ablesevorrichtungen, wie z.B. von einem Encoder abgelesen zu werden.

Nach dem Ueberschreiten der Ventilausnehmungen 20 fuehren die Drehkolben im Mischhohlraumteil 9B einen Misch- bzw. Ruehrhub aus und gelangen nachhar wieder in den Bereich der Seitenwand 9c. Waehrend dieses Misch- bzw. Ruehrhubs schiebt die Vorderwand 16 der Drehkolben 14 die sich im Mischhohlraum 9B befindliche Schokolade nach oben und bewirkt dabei eine innige Durchmischung derselben. Beim erfindungsgemaessen Giessverfahren hat man zwei augenblickliche Anhaltphasen des Rotors, und zwar einmal bei sich auf der die jeweils gewuenschte Erstreckung der Dosierkammern 15 bestimmende Erstreckungslinie a befindenden Drehkolben 14, und andererseits am Ende der Ruehrphase d.h. bei sich im Bereich der Anschlagseitenwand 9c befindlichen Drehkolben 14, um das Eintreten des Ankomm- bzw. Bereitschaftszustimmungssignals der darunterstehenden und sich absatzweise bewegenden Giessform bzw. -bleche abzuwarten. Es waere jedoch auch eine Betriebsweise mit kontinuierlicher Drehung des Rotors ausfuehrbar.

Gemaess einer vorteilhaften erfindungsgemaessen Ausfuehrungsvariante, um ebenfalls die Ruehrhubzeit zur gleichzeitigen Durchfuehrung einer dosierten Produktaustragphase auszunutzen, kann man auf dem Rotor 10 ein Anzahl von voneinander gleichmaessig entfernten Drehkolbenreihen vorsehen, z. B. zwei diametral entgegengesetzte Drehkolbenreihen oder auch mehrere Drehkolbenreihen, je nach dem Durchmesser der scheibenartigen Wellenbunde 12 sowie dem Abstand zwischen denselben.

Die Schwenkbewegung der Ventile 18 in einer dem Pfeil F entgegengesetzten Drehrichtung, d.h. die Einschwenkbewegung der Anschlagabschnitte 18a derselben in den zugeordneten ringfoermigen Dosier kammern 15 wird im gewuenschten Augenblick gesteuert, d. h. wenn die Drehkolben 14 in den Bereich der genannten Anschlagseitenwand 9c gelangen, wobei diese Stellung vorteilhafterweise ueber den genannten Encoder 24 od. dgl. angegeben werden kann.

Es wird ferner hervorgehoben, dass die Austragoeffnung 21b der Austragbohrung 21 im dargestellten Beispiel unterhalb der Unterseite 8a des Giessmaschinenkoerpers 8 ausmuendet, wodurch die von den bekannten Drehventilen zur genannten Unterseite 8a fuehrenden Kanaele vermieden werden. Beim sogenannten "Zungengiessen" wird die genannte Austragbohrung 21 einen langlochartigen Querschnitt, wie in Fig. 2 bei der rechts angeordneten Dosiervorrichtung 2 schematisiert, aufweisen.

Bei der Behandlung von sehr zaehfluessigen bzw. teigartigen Produkten, wie z. B im Falle von Marzipan, hat man sehr gute Ergebnisse unter Anwendung einer Druckwirkung von oben auf dem sich im Produkttrichter befindenden Produkt, wie bei 28 schematisch dargestellt, erreicht. Soche Wirkung kann entweder mit der Anwendung eines Druckkohlbens oder eines gegebenenfalls sich in einem ausdrehnbaren flexiblen Behaelter befindenden Druckmittel erreicht werden. Diese Druckphase wird vorteilhafterweise bei allen Verfahrensphasen des erfindungsgemaessen Giessverfahrens ausgeuebt.

In Fig. 4 sind bei einigen der die einzelnen Drehkolben 14 bildenden Profilabschnitten 14 zu oeffnende Ausnehmungen 14b strichpunktiert angedeutet, die, falls erforderlich, geoeffnet werden koennen und dazu dienen, das Schokoladenaustragen bei den gewuenschten drehbaren Dosierkammern 15 auszuschliessen.

Dem Obengesagten ist entnehmbar, dass es mit dem erfindungsgemaessen Giessverfahren sowie mit der vorgeschlagenen Giessmaschine moeglich wird, die der vorliegenden Erfindung zugrunde gelegte Aufgabe wirksam zu loesen und die angegebenen Vorteile zu erzielen.

Insbesondere werden die betrieblichen Vorteile in bezug auf eine feinfuehlige Einwirkung auf die Schokolade, sowie die Vorteile bezueglich der Vermeidung von Luftblasen und der Vermeidung von Produktleckagen ausserhalb der Giessmaschine, sowie ebenfalls die Vorteile bezueglich eines tadellosen volumentrischen Wirkungsgrads, und zwar in Anwesenheit von gleichzeitigen strukturellen Vorteilen bezueglich einer hohen Verstellungseinfachheit, einer eine kleine Anzahl von Bestandteilen verlangenden Bauweise, sowie die Vorteile bezueglich einer baukastenartigen Bauweise. Mit den vorgeschlagenen Bausteinen wird es moeglich, einen kleinen Raumbedarf verlangende, gedrungene Giessmaschinen zum Austragen einer beliebigen Anzahl von Schokoladensorten bzw. -bestandteilen herzustellen. Mit der verwendeten einsinnigen Drehbewegung ist es gleichzeitig moeglich, Antriebs- und Regelungsmittel bzw. -vorrichtungen einzusetzen, die aeusserst einfach, zuverlaessig sowie einfach zu regeln sind, die ferner mit einer Steuereinheit nach Art eines Computers bzw. von Datenverarbeitungsanlagen zur Automatisierung des Giessverfahrens bzw. Variierung desselben vorteilhafterweise verbunden werden koennen.

Noch ein wichtiger Vorteil der Giessmaschine nach der Erfindung besteht darin, dass dieselbe in schon bestehenden Anlagen ohne besondere Anpassungveraenderungen durchzufuehren, eingesetzt werden kann.

Die gedrungene Bauweise erlaubt ferner eine bessere Ausnutzung der Waermetraegheit der metallischen Bestandteile, sowie eine leichte Realisierung und Anbringung des Erwaermungssystems. Darueber hinaus ist es mit der erfindungsgemaessen Giessmaschine moeglich, jegliches giessbare Produkt, wie Schokolade ohne bzw. mit kleinen festen Bestandteilen, Nougat, Fondant, Marzipan usw. zu behandeln, sowie die ueblichen Giessorten, d. h. das punktfoermige und das zungenartige Schokoladengiessen durchzufuehren. Die erfindungsgemaessen Dosiereinheiten koennen ebenfalls unmittelbar im Unterteil der zugeordneten Schokoladentrichter vorgesehen, bzw. angeordnet werden.

Die schwenkbaren Ventile 18 koennen ohne weiteres durch kammartige eine hin- und hergehende Bewegung statt einer drehbaren Bewegung ausfuehrenden Ventile ersetzt werden. Ferner auch die Kolben/Zylinder-Einheiten zur Steuerung der schwenkbaren Ventile koennen durch Steuerungen mit Zahnstangen od. dgl. ersetzt werden.

Die Bauweise der Dosiervorrichtung bzw. -gruppe koennte umgekehrt ausgefuehrt werden. d.h. die Wellenbunde 12 werden ortsfest im Hohlraum 9 vorgesehen und die Drehkolben 14 wieder auf dem zylindrischen Koerper 11 des Rotors 10 erhalten. Bei dieser Ausfuehrung kann statt des Rotors 10 der den Dosier- und Ruehrhohlraum 9 bildende Giessmaschinenkoerper in Drehung versetzt werden.

**Patentansrpüche**

1. Giessmaschiene fuer Schokolade u. dgl. enthaltend wenigstens einen Trichter fuer die auszutragende Schokolade, wobei die Giessmaschine einen dem Trichter (5) nachgeschalteten profilierten Dosier- und Mischholraum (9) aufweist, der einen in Drehung versetzbaren und mit voneinander entfernten Wellenbunden (12) sowie mit Drehkolben (14) versehenen Rotor (10) aufnimmt, wobei der Rotor (10) auf der einen Seite (Dosierhohlraumteil 9A) eine Veilzahl von nebeneinander nach Art von ringfoermigen Dosierabschnitten gestalteten Dosierkammern (15) bildet, die von den Drehkolben, die eine Schubkraft ausueben, durchlaufen werden und auf der entgegengesetzten Seite (Mischhohlraumtteil 9B) durch die Drehkolben des Rotors eine Ruehrwirkung ausgeuebt wird und wobei in die Dosierkammern (15) jeweils ein Anschlagabschnitt (18a) eines eigenen schwenkbar gelagerten Austragventils (18) alternierend ein- und ausschwenkbar ist, und wobei das Austragventil (18) eine Austragsbohrung (21) aufweist, die mit einer Einlassoeffnung (21a) im genannten Anschlagabschnitt (18a) ausmuendet und wobei das Austragventil eine Ausnehmnung (20) aufweist, die bewirkt, dass beim aus der zugeordneten ringfoermigen Dosierkammer (15) ausgeschwenkten Anschlagabschnitt (18a) die freie Drehbewegung des zugeordneten Drehkolbens (14) ueber das betreffende, schwenkbare Austragventil (18) ermoeglicht wird und wobei die Wellenbunde (12) jeweils einen durchgehenden Sitz (13) aufweisen, die unter sich ausgerichtet sind, und die Drehkolben (14) aus einem sich in Bezug auf den Rotorkoerper (11) axial erstreckenden durchgehenden Profil (14a) bestehen, wobei die Drehkolben (14, 14a) loesbar sind und die Befestigung derselben mit dem zylindrischen Rotorkoerper (11) mittels Schrauben erfolgt und die durchgehenden Sitze (13) zur Aufnahme der Drehkolben (14) in Form des einzigen durchgehenden Profils (14a) dienen.

2. Giessmaschine nach Anspruch 1, dadurch gekennzeichnet, dass die Drehkolben (14) jeweils aus einer zwischen zwei benachbarten Wellenbunden (12) vorgesehenen Trennbruecke (14) bestehen und sich zwischen der Aussenflaeche des zylindrischen Rotorkoerpers (11) und der Umfangsflaeche der genannten Wellenbunde (12) erstrecken.

3. Giessmaschine nach Anspruch 1, dadurch gekennzeichnet, dass der antreibbare Rotorkoerper (11) und die Wellenbunde (12) aus miteinander befestigten Teilen zusammengesetzt sind.

4. Giessmaschine nach Anspruch 1, dadurch gekennzeichnet, dass die Austragsoeffnung (21b) der Druchgangsbohrung (21) eines jeden schwenkbaren Austragventils (18) auf der Giessmaschinenunterseite (8a) bzw. direkt auf einer Eingangsoeffnung der Giessplatte bzw. des Giessbleches (6, 7) muendet.

5. Giessmaschine nach Anspruch 1 und 5, dadurch gekennzeichnet, dass die schwenkbaren Austragventile (18) eine auf einem Wellenelement (19) ausgearbeitete scheibenartige Gestaltung aufweisen, wobei die Austragventile unten aus der Giessmaschinenunterseite (8a) herausragen.

6. Giessmaschine nach Anspruch 1, dadurch gekennzeichnet, dass die Ausnehmung (20) der schwenbaren Austragventile (18) einen kreisfoermigen Umriss mit einem Halbmesser im wesentliche gleich dem Halbmesser der Innenkreislinie des halbzylinderfoermigen Dosierhohlraumteils (9A) des den Rotor (10) aufnehmenden Dosier- und Mischhohlraums (9) besitzt.

7. Giessmaschine nach Anspruch 1, dadurch gekennzeichnet, dass die Anordnung des Anschlagabschnittes (18a) und der Durchgangsausnehmung (20) der schwenkbaren Austragventile (18) derart ist, dass waehrend des Schokoladenaustragvorganges die Ventilkante (22), die von der Ventilausnehmung (20) und von dem Anschlagabschnitt (18a) gebildet ist, als eine mit der Aussenflaeche des Rotorkoerpers (11) zusammenarbeitende Dichtkante wirkt.

8. Giessmaschine nach Anspruch 1, dadurch gekennzeichnet, dass zum Antreiben und Anhalten des mit Drehkolben (14) versehenen Rotors (10) ein Antriebssystem vorgesehen ist, das einen Gleichstrommotor (23) enthaelt, der einem zum Ablesen der Wickelstellung des Rotors (10) dienenden Encoder zugeordnet ist.

9. Giessmaschine nach Anspruch 1, dadurch gekennzeichnet, dass die schwenkbaren Austragventile (18) als kammartige, aus einem wellenartigen Tragelement (19) vorstehende scheibenfoermige Wellenbunde vorgesehen sind.

10. Giessmaschine nach Anspruch 1 und 9, dadurch gekennzeichnet, dass die Antriebsmittel der schwenkbaren Austragventile (18) eine Kolben/Zylinder-Einheit (25) enthalten, die eine das freie Ende (26) der Kolbenstange der genannten Kolben/Zylinder-Einheit (25) und ein freies Ende (19a) des die genannten Austragventile (18) aufweisenden wellenartigen Tragelementes (19) verbindende Verbindungslasche (27) aufweist.

11. Giessmaschine nach Anspruch 1, dadurch gekennzeichnet, dass zum beliebigen Ausschliessen des Schokoladenaustrages in irgendwelcher der ringfoermigen Dosierkammern (15), die den auszuschliessenden Dosierkammern (15) zugeordneten Drehkolben (14) eine in Umfangsrichtung durchgehende Ausnehmung (14b) ausweisen, wobei diese Ausnehmungen (14b) jeweils durch ein mittels Schrauben loesbar anbringbares, blockartiges Verschlusselement geschlossen werden koennen.

12. Giessmaschine nach einem oder mehreren der vorhergehenden Ansprueche, dadurch gekennzeichnet, dass im Trichteroberteil ein Druckmittel (28) in der Form eines Druckkolbens, eines die Zufuhr eines gegebenenfalls in einem sich ausdehnbaren Behaelter aufgenommenen Druckmittels u. dgl. vorgesehen ist.

13. Giessmaschine nach einem oder mehreren der vorhergehenden Ansprueche, dadurch gekennzeichnet, dass die Giessmaschine eine baukastenartige Bauweise aufweist, und zwei oder mehrere Trichter (5) mit ebensovielen in Reihe nebeneinander angeordneten Dosiervorrichtungen (2) besitzt.

14. Giessmaschine nach einem oder mehreren der vorgehenden Ansprueche, dadurch gekennzeichnet, dass die Wellenbunde (12) dem die Dosier- und Mischkammerhohlraum (9) bildenden Giessmaschinenkoerper (8) zugeordnet bzw. im Giessmaschinenkoerper (8) ausgearbeitet sind, wobei auf dem zylindrischen Rotorkoerper (11) die Drehkolben (14) vorgesehen sind.

15. Giessmaschine nach Anspruch 13, dadurch gekennzeichnet, dass die Dosiervorrichtungen (2) mit einzelnen Antrieben versehen sind.

16. Giessverfahren zum Giessen von Schokolade u. dgl. unter Verwendung der Giessmaschine nach Anspruch 1, dadurch gekennzeichnet, dass die folgenden Verfahrensphasen vorgesehen sind:

a) eine durch Schwerkraft erfolgende Schokoladenbeladungsphase bzw. Schokoladendosierphase aus dem Schokoladentrichter (5) in jede Dosierkammer (15),

b) eine Schokoladenaustragphase bei kontinuierlicher einsinniger Drehbewegung der Drehkolben (14) in den Dosierkammern (15),

c) eine Auschschwenkphase einer beweglichen Wand bzw. einer Anschlagwand (18a) aus den genannten Dosierkammern, d.h. eine Austragsunterbrechungsphase,

d) eine Schokoladenruehrphase mittels Durchgang der Drehkolben (14) durch den den Dosierkammern (15) entgegengesetzten Mischhohlraum (9B) hindurch, wobei die Schokolandebeladungsphase und die Schokoladenaustragphase im wesentlichen gleichzeitig erfolgen.

17. Giessverfahren nach Anspruch 16, dadurch gekennzeichnet, dass bei jeder einsinnigen Drehbewegung des mit Drehkolben (14) ausgestatteten Rotors (10) zwei Bewegungsunterbrechungen vorgesehnen werden, und zwar,

eine Bewegungsunterbrehung am Austraganfang, d.h. mit Drehkolben (14) im Mischhohlraum (9B) bzw. in der Naehe der seitlichen Anschlagseite (9c), d.h. eine Synchronismusunterbrechung im Gleichlauf mit der Vorwaerts- bzw. Speisebewegung der Giessformen (7); und

eine Bewegungsunterbrechung am Austragsende, wenn die Drehkolben (14) die ringfoermige Austragestrecke (α) durchgefahren sind bzw. in der Nache der Grenzlinie (a) gelangt sind, um den Anschlagabschnitten (18a) zu ermoglichen, aus den betreffenden Dosierkammern (15) herauszuschwenken.

18. Giessverfahren nach Anspruch 16 und 17, dadurch gekennzeichnet, dass bei sehr zaehfluessigen bzw. teigartigen zu behandelnden Produkten, die Verfahrensphasen der Mitwirkung einer von oben im Produktrichter (5) sowohl mittelbar als auch unmittelbar erfolgender Druckwirkung ausgesetzt sind.

**Revendications**

1. Machine de coulée pour le chocolat et analogues contenant au moins une trémie pour le chocolat à distribuer, la machine de coulée présentant une cavité profilée (9) de dosage et de mélange suivant la trémie (5), qui reçoit un rotor (10) pouvant être mis en rotation et pourvu de colliers d'arbre (12) éloignés les uns des autres ainsi que de pistons rotatifs (14), le rotor (10) formant d'un côté (partie cavité de dosage 9A) un certain nombre de chambres voisines de dosage (15) configurées comme des sections annulaires de dosage, qui sont traversées par les pistons rotatifs qui exercent une force de poussée, et du côté opposé (partie cavité de mélange 9B) est exercé un effet d'agitation par les pistons rotatifs du rotor et dans chaque chambre de dosage (15) est logée en pouvant être pivotée alternativement vers l'intérieur et vers l'extérieur, une section d'arrêt (18a) d'une soupape de distribution (18) logée pivotante, la soupape de distribution (18) présentant un perçage de distribution, qui débouche par un orifice d'admission (21a) dans ladite section d'arrêt (18a) et la soupape de distribution présente un évidement (20) qui a pour effet qu'avec la section d'arrêt (18a) pivotée hors de la chambre de dosage annulaire (15) qui lui est affectée, le libre mouvement de rotation du piston rotatif correspondant (14) est rendu possible par l'intermédiaire de la soupape correspondante pivotante de distribution (18) et chaque collier d'arbre (12) présente un siège continu (13) lesquels sont alignés entre eux, et les pistons rotatifs (14) se composent d'un profil continu (14a) s'étendant axialement relativement au corps (11) du rotor, les pistons rotatifs (14, 14a) étant détachables et la fixation de ceux-ci au corps cylindrique de rotor (11) se produisant au moyen de vis et les sièges continus (13) servant à la réception des pistons rotatifs (14) sous la forme du profil individuel continu (14a).

2. Machine de coulée selon la revendication 1, caractérisée en ce que chaque piston rotatif (14) se compose d'un pont de séparation (14) prévu entre deux colliers voisins d'arbre (12) et s'étendant entre les surfaces externes du corps cylindrique de rotor (11) et les surfaces périphériques desdits colliers d'arbre (12).

3. Machine de coulée selon la revendication 1, caractérisée en ce que le corps de rotor (11) pouvant être entraîne et les colliers d'arbre (12) se composant de pièces fixées les unes aux autres.

4. Machine de coulée selon la revendication 1, caractérisée en ce que l'ouverture de distribution (21b) du perçage de passage (21) de chaque soupape de distribution pivotante (18) débouche au-dessous de la machine de coulée (8a) ou, respectivement, directement sur une ouverture d'entrée de la plaque de coulée ou, respectivement, de la tôle de coulée (6, 7).

5. Machine de coulée selon la revendication 1 et 5, caractérisée en ce que les soupapes pivotantes de distribution (18) ont une configuration en disque élaborée sur un élément d'arbre (19) et les soupapes de distribution dépassent en dessous, hors du dessous (8a) de la machine de coulée.

6. Machine de coulée selon la revendication 1, caractérisée en ce que l'évidement (20) des soupapes pivotantes de distribution (18) possède un contour circulaire ayant un rayon essentiellement égal au rayon ou cercle intérieur de la partie de cavité de dosage (9A) en forme hémicylindrique de la cavité de dosage et de mélange (9) recevant le rotor (10).

7. Machine de coulée selon la revendication 1, caractérisée en ce que l'agencement de la section d'arrêt (18a) et de l'évidement de passage (20) des soupapes pivotantes de distribution (18) est tel que, pendant le processus de distribution de chocolat, l'arête (22) de soupape, qui est formée de l'évidement de soupape (20) et de la section d'arrêt (18a), agit comme un bord d'étanchéité coopérant avec la surface externe du corps de rotor (11).

8. Machine de coulée selon la revendication 1, caractérisée en ce que pour l'entraînement et l'arrêt du rotor (10) pourvu des pistons rotatifs (14) est prévu un système d'entraînement, qui contient un moteur à courant continu (23) auquel est effecté un codeur servant à la lecture de la position angulaire du rotor (10).

9. Machine de coulée selon la revendication 1, caractérisée en ce que les soupapes pivotantes de distribution (18) sont prévues en tant que colliers d'arbre en disque en forme de came dépassant d'un élément de support (19) en forme d'arbre.

10. Machine de coulée selon la revendication 1 et 9, caractérisée en ce que les moyens d'entraînement des soupapes pivotantes de distribution (18) contiennent une unité à cylindre/piston (25) qui présente une éclisse de raccordement (27) reliant l'extrémité libre (26) de la tige de piston de ladite unité à cylindre/piston (25) et une extrémité libre (19a) de l'élément de support (19) en forme d'arbre présentant ladite soupape de distribution (18).

11. Machine de coulée selon la revendication 1, caractérisée en ce que pour l'exclusion facultative de la distribution de chocolat dans l'une des chambres annulaires de dosage (15), les pistons rotatifs (14) affectés à la chambre de dosage (15) à exclure présentent un évidement périphériquement continu (14b), lesdits évidements (14b) pouvant être fermés par un élément de fermeture en forme de bloc, pouvant être mis en place de manière détachable au moyen de vis.

12. Machine de coulée selon l'une quelconque des revendications précédentes, caractérisée en ce qu'à la partie supérieure de la trémie est prévu un moyen de pression (28) sous la forme d'un piston de pression d'un moyen de pression reçu le cas échéant dans un récipient extensible et analogues.

13. Machine de coulée selon l'une quelconque des revendications précédentes, caractérisée en ce que la machine de coulée présente une construction modulaire et possède deux ou plusieurs trémies (5) avec le même nombre de dispositifs de dosage (2) agencés en série les uns à côté des autres.

14. Machine de coulée selon l'une quelconque des revendications précédentes, caractérisée en ce que les colliers d'arbre (12) sont affectés au corps de la machine de coulée (8) formant le cavité (9) de dosage et de mélange ou respectivement sont élaborés dans le corps (8) de la machine de coulée et sur le corps cylindrique de rotor (11) sont prévus les pistons rotatifs (14).

15. Machine de coulée selon la revendication 13, caractérisée en ce que les dispositifs de dosage (2) sont pourvus d'entraînements individuels.

16. Procédé de coulée pour le coulage de chocolat et analogues en utilisant la machine de coulée selon la revendication 1, caractérisé en ce que les phases suivantes de procédé sont prévues:

a) une phase de chargement du chocolat ou respectivement une phase de dosage du chocolat se produisant sous l'effet de la presanteur de la trémie de chocolat (5) vers chaque chambre de dosage (15),

b) une phase de distribution du chocolat par mouvement rotatif continu dans un seul sens des pistons rotatifs (14) dans les chambres de dosage (15),

c) une phase de pivotement d'une paroi mobile ou respectivement d'une paroi d'arrêt (18a) hors desdites chambres de dosage, c'est-à-dire une phase d'interruption de distribution,

d) une phase d'agitation du chocolat au moyen du passage des pistons rotatifs (14) à travers la cavité de mélange (9B) opposée aux chambres de dosage (15), le phase de chargement du chocolat et la phase de distribution du chocolat se produisant pratiquement simultanément.

17. Procédé de coulée selon la revendication 16, caractérisé en ce que dans chaque mouvement rotatif dans un sens du rotor (10) équipé de pistons rotatifs (14) sont prévues deux interruptions du mouvement, c'est-à-dire; une interruption du mouvement au début de la distribution, c'est-à-dire avec les pistons rotatifs (14) dans la cavité de mélange (9B) ou respectivement à proximité des côtés latéraux d'arrêt (9c) c'est-à-dire une interruption de synchronisme en synchronisme avec le mouvement d'avance ou respectivement d'alimentation des moules (7); et

une interruption de mouvement à l'extrémité de distribution lorsque les pistons rotatifs ont percouru le tronçon annulaire de distribution (α) ou respectivement sont arrivés à l'extrémité de la ligne limite (a) pour permettre aux sections d'arrêt (18a) de pivoter hors des chambres correspondantes de dosage (15).

18. Procédé de coulée selon la revendication 16 et 17, caractérisé en ce que dans le cas de produits à traiter qui sont très visqueux ou qui ressemblent à de la pâte, les phases de procédé sont soumises à la coopération d'un effet de pression se produisant d'en haut dans la trémie (5) du produit, aussi bien directement qu'indirectement.

## Claims

1. Pouring machine for chocolate and the like, comprising at least one funnel for the chocolate to be discharged, the pouring machine having a profiled dosing and mixing hollow space (9) which is arranged downstream from the funnel (5) and accommodates a rotor (10) which can be set in rotation and is provided with shaft collars (12), distanced from one another, and also rotary pistons (14), in which arrangement the rotor (10), on one side (dosing hollow-space part 9A), forms a plurality of dosing chambers (15) constructed side by side like annular dosing sections, through which dosing chambers (15) the rotary pistons, which exert a thrust force, pass, and a stirring effect is exerted by the rotary pistons of the rotor on the opposite side (mixing hollow-space part 9B), and a stop section (18a) of a separate, pivotally mounted discharge valve (18) can in each case be alternately pivoted into and out of the dosing chambers (15), and the discharge valve (18) has a discharge bore (21) which, with an inlet opening (21a), leads out in the said stop section (18a), and the discharge valve has a recess (20) which, when the stop section (18a) is pivoted out of the allocated annular dosing chamber (15), enables the allocated rotary piston (14) to rotate freely across the relevant, pivotable discharge valve (18), and the shaft collars (12) each have a continuous seat (13), which seats (13) are in alignment with one another, and the rotary pistons (14) consist of a continuous profile (14a) extending axially with regard to the rotor body (11), the rotary pistons (14, 14a) being detachable and the same being fixed to the cylindrical rotor body (11) by means of screws and the continuous seats (13) serving to accommodate the rotary pistons (14) in the form of the single continuous profile (14a).

2. Pouring machine according to Claim 1, characterized in that the rotary pistons (14) each consist of a separating bridge (14) provided between two adjacent shaft collars (12) and extend between the outer surface of the cylindrical rotor body (11) and the peripheral surface of the said shaft collars (12).

3. Pouring machine according to Claim 1, characterized in that the driveable rotor body (11) and the shaft collars (12) are composed of parts fixed to one another.

4. Pouring machine according to Claim 1, characterized in that the discharge opening (21b) of the through-bore (21) of each pivotable discharge valve (18) leads out on the underside (8a) of the pouring machine or directly at an inlet opening of the pouring plate (6, 7).

5. Pouring machine according to Claims 1 and 5, characterized in that the pivotable discharge valves (18) have a disc-like configuration formed on a shaft element (19), the discharge valves projecting at the bottom from the underside (8a) of the pouring machine.

6. Pouring machine according to Claim 1, characterized in that the recess (20) of the pivotable discharge valves (18) has a circular outline with a radius essentially equal to the radius of the inner circular line of the semi-cylindrical dosing hollow-space part (9A) of the dosing and mixing hollow space (9) accommodating the rotor (10).

7. Pouring machine according to Claim 1, characterized in that the arrangement of the step section (18a) and the continuous recess (20) of the pivotable discharge valves (18) is such that, during the chocolate-discharge operation, the valve edge (22) which is formed by the valve recess (20) and the stop section (18a) acts as a sealing edge interacting with the outer surface of the rotor body (11).

8. Pouring machine according to Claim 1, characterized in that, to drive and stop the rotor (10) provided with rotary pistons (14), a drive system is provided which comprises a direct-current motor (23) to which an encoder is allocated which serves to read the angular position of the rotor (10).

9. Pouring machine according to Claim 1, characterized in that the pivotable discharge valves (18) are provided as comb-like, disc-shaped shaft collars projecting from a shaft-like supporting element (19).

10. Pouring machine according to Claims 1 and 9, characterized in that the drive means of the pivotable discharge valves (18) comprise a piston/cylinder unit (25) which has a connecting strap (27) connecting the free end (26) of the piston rod of the said piston/cylinder unit (25) and a free end (19a) of the shaft-like supporting element (19) having the said discharge valves (18).

11. Pouring machine according to Claim 1, characterized in that, to exclude the discharge of chocolate as desired in any of the annular dosing chambers (15), the rotary pistons (14) allocated to the dosing chambers (15) to be excluded have a recess (14b) which is continuous in the peripheral direction, in which arrangement these recesses (14b) can each be closed by a block-like closure element which can be detachably fixed by means of screws.

12. Pouring machine according to one or more of the preceding claims, characterized in that a pressure means (28) in the form of a pressure piston, of a [sic] the supply of a pressure medium and the like, accommodated if need be in an extendable container, is provided in the top part of the funnel.

13. Pouring machine according to one or more of the preceding claims, characterized in that the pouring machine has a modular type of construction and has two or more funnels (5) with just as many dosing devices (2) arranged next to one another in a row.

14. Pouring machine according to one or more of the preceding claims, characterized in that the shaft collars (12) are allocated to the pouring machine body (8) forming the dosing-and mixing-chamber hollow space (9) or are formed in the pouring machine body (8), the rotary pistons (14) being provided on the cylindrical rotor body (11).

15. Pouring machine according to Claim 13, characterized in that the dosing devices (2) are provided with individual drives.

16. Pouring process for pouring chocolate and the like while using the pouring machine according to Claim 1, characterized in that the following phases of the process are provided:

a) a chocolate-loading phase or chocolate-dosing phase, effected by force of gravity, from the chocolate funnel (5) into each dosing chamber (15),

b) a chocolate-discharge phase during continuous, unidirectional rotary movement of the rotary pistons (14) in the dosing chambers (15),

c) a pivoting phase of a movable wall or a stop wall (18a) out of the said dosing chambers, i.e. a discharge-interrupt phase,

d) a chocolate-stirring phase by passage of the rotary pistons (14) through the mixing hollow space (9B) opposed to the dosing chambers (15), the chocolate-loading phase and the chocolate-discharge phase essentially taking place at the same time.

17. Pouring process according to Claim 16, characterized in that, during each unidirectional rotary movement of the rotor (10) equipped with rotary pistons (14), two interruptions of movement are provided, namely:

an interruption of movement at the start of discharge, i.e. with rotary pistons (14) in the mixing hollow space (9B) or close to the lateral stop side (9c), i.e. a synchronism interruption in synchronism with the forward or feed movement of the pouring moulds (7); and

an interruption of movement at the end of discharge when the rotary pistons (14) have covered the annular discharge distance ($\alpha$) or have come close to the limit line ($a$) in order to enable the stop sections (18a) to pivot out of the relevant dosing chambers (15).

18. Pouring process according to Claims 16 and 17, characterized in that, in the case of very viscous or pasty products to be treated, the phases of the process are assisted by a pressure effect produced both indirectly and directly from above in the product funnel (5).

FIG.1

FIG. 2

FIG. 3

EP 0 122 369 B1

FIG. 4